# FASCICULE DE BREVET EUROPEEN

(11) **EP 0 894 300 B1**
(45) Date de publication et mention de la délivrance du brevet: **02.05.2001**
(21) Numéro de dépôt: 97915518.1
(22) Date de dépôt: 19.03.1997
(51) Int. Cl.: G06F 1/18, H05K 7/16

(54) **DISPOSITIF D'AUTO-BLOCAGE D'UNE CARTE-MERE ET DE SES EXTENSIONS PIVOTANTES DANS UN MICRO-ORDINATEUR**
VORRICHTUNG ZUM AUTOMATISCHEN BLOCKIEREN EINER TRÄGERLEITPLATTE UND SCHWENKBAREVERLÄNGERUNGEN DAVON IN EINEM MIKRO-COMPUTER
DEVICE FOR AUTOMATICALLY LOCKING A MOTHER-BOARD AND THE PIVOTABLE EXTENSIONS THEREOF IN A MICROCOMPUTER

(30) Priorité: 19.03.1996 FR 9603560
(43) Date de publication de la demande: 03.02.1999
(73) Titulaire: Samaha, Victor, 94220 Charenton Le Pont (FR); Takvorian, Eric, 31700 Beauzelle (FR)
(72) Inventeur: TAKVORIAN, Eric, F-31700 Beauzelle (FR)
(86) Numéro de dépôt international: FR9700486
(87) Numéro de publication internationale: WO9735245

(56) Documents cités:
- EP-A- 0 104 997
- WO-A-95/20785
- DE-U- 9 415 823

## Description

Dispositif d'auto-blocage d'une carte-mère et de ses extensions pivotantes dans un micro-ordinateur.

La carte mère et les extensions dans un boitier micro-ordinateur sont fixes au milieu de leurs cables et de leurs nappes de fils conducteurs, sachant que celles-ci doivent êtres accéssibles à toutes personnes y compris les novices le désirant (améliorer ou changer des composants), l'inaccéssibilité risquerait de provoquer un désaccouplement involontaire des connexions et d'engendrer une panne voire une destruction de toute ou partie de l'ordinateur apres sa fermeture et à la suite de sa mise sous tension secteur.

Les dispositifs selon les revendications permettent de remedier à ces inconvénients. Ils comportent en effet selon les premières caracteristiques, un panneau support carte-mère et un panneau support extensions dit périphériques dans le boitier d'un micro-ordinateur, les deux panneaux sont solidaires et fixes l'un par rapport aux autres, montés sur charnières pour permettre une rotation de dégagement vers l'exterieur de l'ensemble, le tout bloqué automatiquement en position interieure par un vérrou sur charnière ayant prise sur le panneau d'extensions à la remise en place du capot décor, le coté opposé sur l'ensemble carte-mère étant également bloqué par se même capot décor à l'aide d'une épaisseur souple, d'autre part l'invention permet de rendre solidaire la carte mère et ses extensions tout en leur donnant une bonne accessibilité par leur rotation.

Les déssins annexés illustrent l'invention:

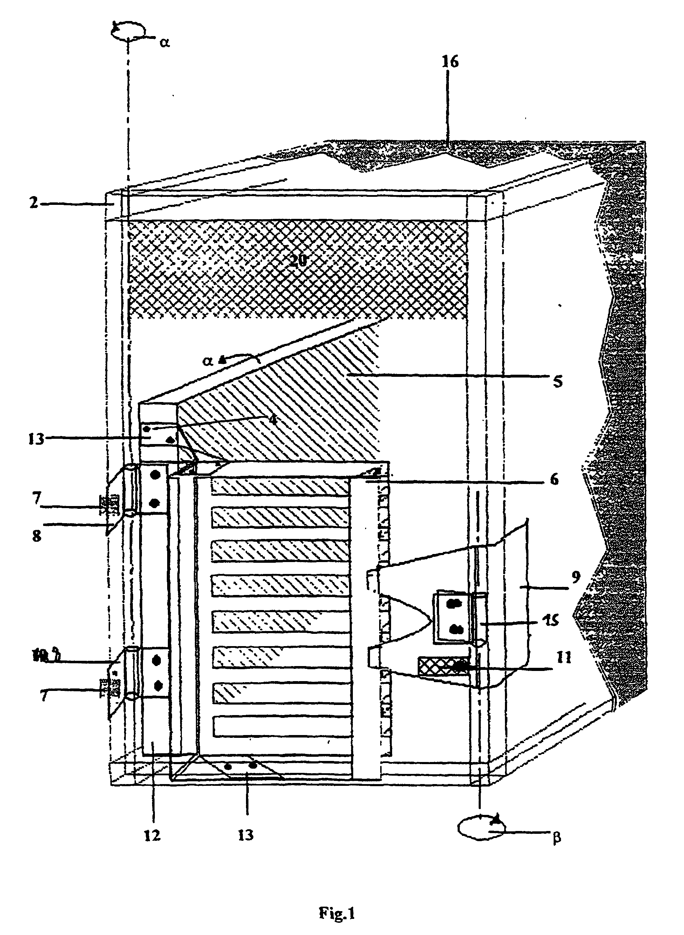

La **Fig.1** représente une vue en perspective arrière du dispositif selon l'invention.
La **Fig.2** représente une vue de profil du vérrou.
La **Fig.3** représente une vue de face du vérrou.
La **Fig.4c** représente une vue arrière du vérrou.

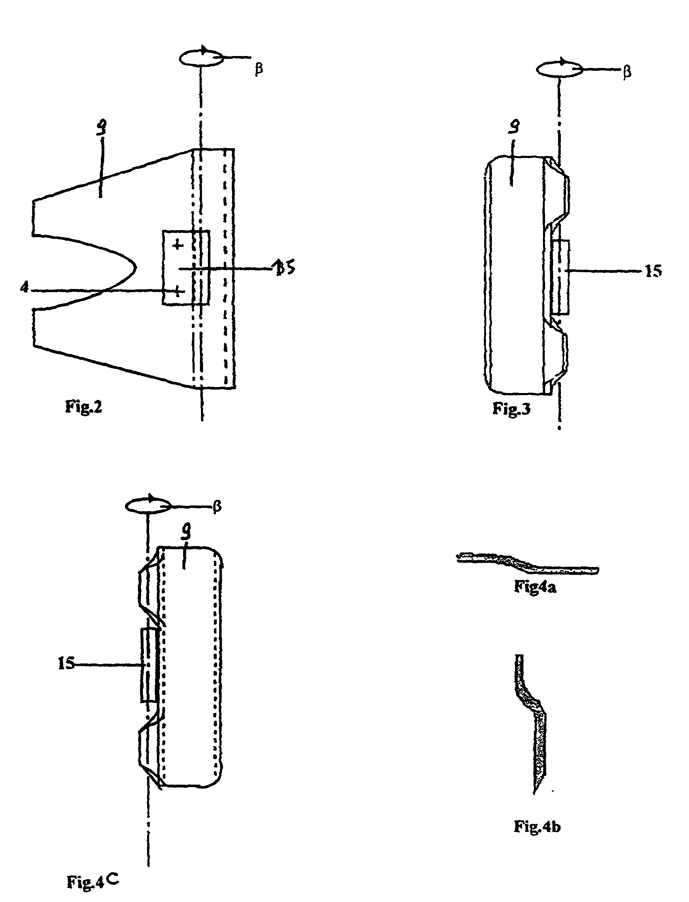

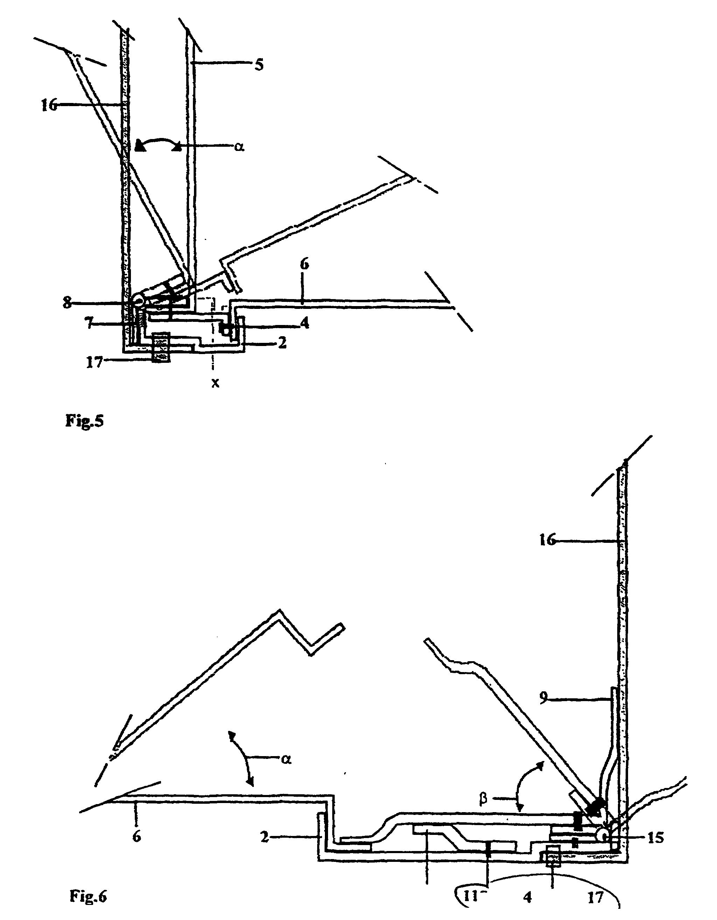

La **Fig.4a** représente une vue en coupe coté verrouillage.
La **Fig.4b** représente une vue en coupe coté panneaux pivotants.
La **Fig.5** représente une vue en coupe de dessus, la fixation du panneau carte-mère et du panneau extensions avec leurs charnières.
La **Fig.6** représente une vue en coupe de dessus, le verrouillage et le dévérrouillage du di spositif par le capot décor.

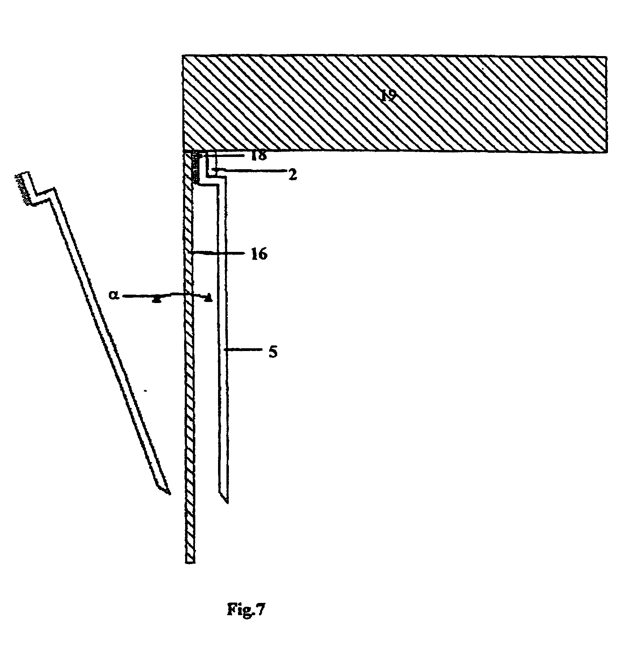

La **Fig.7** représente une vue en coupe de dessus, le blocage coté extrémité carte-mère par le capot décor.

En référence à ces déssins, le dispositif comporte un support carte-mère (5) soudé sur deux charnières (15) entre lesquels viens se fixer une équerre (12) comportant sur l'autre face le panneau support extensions (6), le tout soudé (4) ensemble, des renforts d'angles (13) sont nécessaires en haut et en bas confortant l'angle fixe (x) de 90° des deux panneaux, les charnières (15) sont vissées (7) sur l'armature du boitier (2) pour permettre un éventuel désaccouplement de l'ensemble pivotant (α).

Le vérrou (9) de l'ensemble panneau carte-mère (5) et panneau extensions (6) sera courbe du coté blocage pour permettre de souder la charnière (15) qui engendre la rotation (β) et permettre la compression du ressort (11) ou le degagement minimum de 45° qui libère le dispositif cité ci-dessus, du coté capot décor (16) se vérrou sera également courbe pour permettre l'encastrement de l'armature du boitier (2) pour une bonne applique du capot (16).

La carte-mère de l'ordinateur venant se fixer sur le panneau pivotant (5), les périphériques s'accouplant avec la carte à 90° grâce à l'angle (x) et fixés sur le panneau des extensions (5), l'ensemble sur charnières (8) permettant une très grande accessibilité aux différentes connexions du système par sa rotation (α) dans les deux sens avec un angle d'ouverture maximum de 180°. Le tout bloqué par la mise en place du capot décor (16) en appuyant sur le vérrou (9), le capot décor (16) appuyant également sur l'épaisseur (18) bloquant et vérrouillant le systeme automatiquement en deux endroits simultanément (9 et 18).

A l'inverse au retrait du capot décor (16) après avoir ôté les vis (17) celui-ci libère le vérrou (9) qui se fait repousser vers l'extérieur par le ressort (11) et grace à la rotation (β) de la charnière (15), le capot libère également l'épaisseur (18), l'ensemble des panneaux (5-6) pivotent librement.

Les dimensions et les formes de l'invention ne sont pas limitatives, le panneau support carte-mère (5) et le panneau support extensions (6) sont solidaires l'un de l'autre par l'intermédiaire d'une équerre (12) qui peut etre une pièce à part, ou sous forme d' appendice soit au panneau carte-mère (5) soit au panneau extensions (6), les deux panneaux et l'équerre (12) peuvent aussi être directement formés dans la même pièce.

Le dispositif selon l'invention est particulierement destiné à l'ouverture et à l'accessibilité interne d'un micro-ordinateur et à sa fermeture.

## Revendications

1. Dispositif d'auto-blocage d'une carte-mère et de ses extensions pivotantes et amovibles dans un boitier micro-ordinateur caractérisé en ce qu'il comporte dans le boitier un panneau carte-mère (5) et un panneau extensions (6) fixes et dépendants l'un de l'autre par l'intermédiaire de l'équerre (12) et maintenus par des renforts d'angles (13) le tout soudés ensembles (x) avec une mobilité (α) donnée par deux charnières détachables (8) l'ensemble vérouillés ou dévérouillés grace à un vérrou (9) rotatif (β) du fait de la pose ou de la dépose du capot décor (16), une épaisseur souple (18) bloque également le panneau (5) coté face avant du boitier par préssion du capot décor (16) à cet endroit

2. Dispositif selon la revendication 1 caractérisé en ce que le panneau support carte-mère (5) et le panneau support extensions (6) sont solidaires l'un de l'autre par l'équerre (12) et montés sur deux chamières (8) qui donnent une rotation (α) maximale de 180° dans les deux sens.

3. Dispositif selon la revendication 1 ou la revendication 2 caractérisé en ce qu'un vérrou (9) monté sur charnière (15) viens bloquer l'ensemble panneaux (5-6-12-13) par préssion du capot décor (16) sur sa face exterieure.

4. Dispositif selon l'une quelconque des revendications précédentes caractérisé en ce qu'un ressort (11) permette de dégager le vérrou (9) vers l'exterieur.

5. Dispositif selon l'une quelconque des revendications précédentes caractérisé en ce que le support carte-mère (5), le support extensions (6), l'equerre (12), les renforts d'angle (13) et les charnières (8) peuvent êtres constitués de plusieurs ou de une seule pièce et et le tout amovible du boitier.

6. Dispositif selon l'une quelconque des revendications précédentes caractérisé en ce qu'une épaisseur souple (18) permette de bloquer l'ensemble panneaux (5-6-12-13) sur l'avant du boitier.

7. Dispositif selon l'une quelconque des revendications précédentes caractérisé en ce que les cartes extensions et la carte-mère ordinateur deviennent solidaires et amovibles grace à l'ensemble panneau pivotant (5-6-12-13) sur charnières (8).

## Patentansprüche

1. Selbstsperrende Vorrichtung einer Träger-Leiterplatte und ihrer ausschwekenden und abnehmbaren Erweiterungen in einem Mikrocomputergehäuse. Ihr Kennzeichen : im Gehäuse enthält sie eine Träger-Leiterplatte-Unterlage (5) und eine Erweiterungen-Unterlage (6). Sie sind fest, hängen eine von der anderen durch den Winkel (12) ab und sind mit Eckverstärkungen (13) zusammengehalten. Das Ganze wird gemeinsam (x) eingelätet und die Beweglichkeit (α) wird mittels zwei Drehgelenke (8) gegeben. Das Ganze wird dank einem rotativen Riegel (9) aus Grunde des Legens oder des Ablegens der Abdeckhaube (16) verriegelt oder entrriegelt. Eine flexible Dicke (18) blockiert auch das Panel (5) an der Vorderseite des Gehäuses durch Drücken der Abdeckhaube (16) an dieser Stelle.

2. Vorrichtung gemäß dem Patentanspruch 1. Ihr Kennzeichen : die Träger-Leiterplatte Unterlage (5) und die Erweiterungen-Untertage (6) sind durch den Winkel (12) einander solldarisch und auf zwei Drehgelenke (8) zusammengesetzt, welche ein maximales Austrittdrehen (α) um 180° hin und her geben.

3. Vorrichtung gemäß dem Patentanspruch 1 oder dem Patentanspruch 2. Ihr Kennzeichen : ein Riegel (9), welches auf Drehgelenke (15) zusammengesetzt wird, riegelt die Ganzheit der Panele 5-6-12-13 durch Drücken der Abdeckhaube (16) auf ihrer äußeren Seite.

4. Vorrichtung gemäß einem der vorherigen Patentansprüchen. Ihr Kennzeichen : eine Feder (11) erlaubt das Riegel (9) nach außen zu befreien.

5. Vorrichtung gemäß einem der vorherlgen Patentansprüche. Ihr Kennzeichen : die Träger-Leiterplatte-Untertage (5), die Erweiterungen-Unterlage (6), der Winkel (12), die Eckverstärkungen (13) und die Drehgelenke (8) kännen aus mehreren Stücken oder aus einem einzelnen Stück bestehen und das Ganze Ist vom Gehäuse abnehmbar.

6. Vorrichtung gemäß einem der vorherigen Patentansprüche. Ihr Kenn-zelchen : eine flexible Dicke (18) erlaubt die Ganzheit der Panele (5-6-12-13) auf der Vorderseite des Gehäuses zu blockieren.

7. Vorrichtung gemäß einem der vorherigen Patentansprüche. Ihr Kennzeichen : die Erweiterungen-Leiterplatten und die Träger-Leiterplatte des Computers werden dank dem auf Drehgelenken (8) ausschwekenden Panel (5-6-12-13) einander solidarisch und abnehmbar.

## Claims

1. Device for automatically locking a pivotable mother-board and its extensions in a computer characterized in a mother-board panel (5) and one extensions panel (6) fixed and dependent one to the other via the square (12) and maintained by a angle reinforced (13) the whole welded together (x) with a mobility (α) given by two separable hinges (8) the unit locked or unbolted through to a rotary (β) bolt (9) with the installation or on demounting of the finish cap (16), a flexible thickness (18) also blocks the panel (5) on the front face of case by pressure of the finish cap (16) at this place.

2. Device according to vindication 1 characterized in that the supporting panel of mother-board (5) and the supporting panel of extensions (6) are interdependent one to the other by the square (12) and assembled up on two hinges (8) who give a rotation (α)180° maximum in the two directions.

3. Device according to vindication 1 or the vindication 2 characterized in what a bolt (9) gone up on hinge (15) come to block the panels unit (5-6-12-13) by pressure of the finish cap (16) on its external face.

4. Device according to any of the vindications preceding characterized in that a spring (11) allows to release the bolt (9) towards outside.

5. Device according to any of the vindications preceding characterized in that supporting of mother-card (5), the supporting of extensions (6), the square (12), angles reinforcements (13) and hinges (8) can be done by several or by only one part and all removable parts of the case.

6. Device according to any of the vindications preceding characterized in that thickness flexible (18) allows to block the unit panels (5-6-12-13) on the front face of the case.

7. Device according to any of the vindications preceding characterized in that the extensions card and the mother-card become interdependent and removable through the swivel panel unit (5-6-12-13) on hinges (8).
